Europäisches Patentamt

European Patent Office

Office européen des brevets

(19)

(11) **EP 1 325 468 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(21) Anmeldenummer: **01986364.6**

(22) Anmeldetag: **04.10.2001**

(51) Int Cl.⁷: **G06K 19/077**

(86) Internationale Anmeldenummer:
**PCT/EP2001/011464**

(87) Internationale Veröffentlichungsnummer:
**WO 2002/029714 (11.04.2002 Gazette 2002/15)**

(54) **TRANSPONDEREINHEIT SOWIE TRANSPORTEINHEIT UND KARTE**

TRANSPONDER UNIT AND TRANSPORT UNIT AND CARD

UNITE DE TRANSPONDEUR, UNITE DE TRANSPORT ET CARTE

(84) Benannte Vertragsstaaten:
**AT BE CH CY DE DK ES FI FR GB GR IE IT LI LU MC NL PT SE TR**

(30) Priorität: **04.10.2000 EP 00810911**

(43) Veröffentlichungstag der Anmeldung:
**09.07.2003 Patentblatt 2003/28**

(73) Patentinhaber: **SOKYMAT S.A.**
**1614 Granges (Veveyse) (CH)**

(72) Erfinder:
• **HELD, Philippe**
**CH-1802 Corseaux (CH)**
• **KONOPITZKY, Egon**
**CH-1618 Châtel-St-Denis (CH)**

• **MIEHLING, Martin**
**CH-1614 Granges (CH)**
• **JURISCH, Reinhard**
**99198 Erfurt (DE)**
• **PEITSCH, Peter**
**99096 Erfurt (DE)**

(74) Vertreter: **Besse, François**
**ANDRE ROLAND IPS,**
**15, Avenue Tissot,**
**P.O. Box 1255**
**1001 Lausanne (CH)**

(56) Entgegenhaltungen:
EP-A- 0 249 356          EP-A- 0 762 535
EP-A- 1 031 939          DE-A- 19 628 802
GB-A- 2 288 103

EP 1 325 468 B1

**Beschreibung**

**Technisches Gebiet**

Die Erfindung betrifft eine Transpondereinheit gemäss dem Oberbegriff des Anspruchs 1. Derartige Transpondereinheiten werden zur Identifikation vor allem von Gegenständen verschiedener Art eingesetzt. Ausserdem betrifft die Erfindung eine Transporteinheit zum Transport von Gütern, welche eine Transpondereinheit enthält und eine ebenfalls eine Transpondereinheit enthaltende Karte.

**Stand der Technik**

Transpondereinheiten, bei welchen jeweils ein Transponder mit einer integrierten Schaltung und einer Antennenschleife z. B. in einer Karte integriert ist, sind seit langem bekannt (s. z. B. US-A-5 800 763). Eine Antennenwicklung dient neben dem Aussenden von Signalen durch den Transponder der Energieversorgung der integrierten Schaltung, wenn der Transponder mittels eines Lesegeräts ausgelesen wird, indem der magnetische Anteil eines von dem letzteren ausgehenden elektromagnetischen Wechselfeldes in der Antennenwicklung einen Wechselstrom induziert, der gleichgerichtet und z. B. zum Aufladen eines Kondensators genutzt wird. Im Hinblick auf eine ausreichende Energieaufnahme auch bei grossem Leseabstand und entsprechend kleiner Feldstärke sollte die von der Antennenwicklung umgebene Fläche möglichst gross und ihr Ohmscher Widerstand möglichst klein sein. Auch eine verhältnismässig grosse Windungszahl ist für die Energieaufnahme grundsätzlich günstig.

Diese Anforderungen sind schwer zu erfüllen. Vor allem sind grosse Wicklungen mit höheren Windungszahlen schwer und nicht auf herkömmlichen Maschinen herstellbar und die entsprechenden Transponder gross und unhandlich und ihre Verpackung oder gar Kapselung aufwendig und teuer. Ausserdem ist die Windungszahl oft durch andere Anforderungen beschränkt oder weitgehend festgelegt.

In EP-B-0 657 836 wurde eine gattungsgemässe Transpondereinheit vor allem zur Identifikation von Autoreifen vorgeschlagen, bei der im Hinblick auf eine Verringerung der Abhängigkeit der Datenübertragung von der genauen Position des Lesegeräts ein Koppelkreis vorgesehen ist, der eine verhältnismässig grosse, dem Umfang des Reifens folgende Primärwicklung aufweist, während die Sekundärwicklung mit der Antennenwicklung schwach induktiv gekoppelt ist. Das Lesegerät ist beim Auslesen von Daten aus dem Transponder unmittelbar vor allem mit der Primärwicklung induktiv gekoppelt, während die Sekundärwicklung die weitere Kopplung mit der Antennenwicklung des Transponders herstellt. Da bei nicht zu grossem Abstand des Lesegeräts von der Primärwicklung dessen Kopplung an dieselbe und damit an den Transponder für das Auslesen ausreichend ist, ist der Raumbereich, über den die relative Position des Lesegeräts variieren kann, entsprechend der grösseren Ausdehnung der Primärwicklung wesentlich grösser als bei bekannten Transpondereinheiten ohne Koppelkreis.

Da die Sekundärwicklung jedoch nur schwach an die Antennenwicklung des Transponders gekoppelt ist, ist die Uebertragung von Energie vom Lesegerät auf den Transponder insgesamt nicht optimal und eine ausreichende Energieaufnahme des letzteren nur bei verhältnismässig grossen Feldstärken, d. h. geringem Abstand des Lesegeräts von der Primärwicklung gewährleistet.

**Darstellung der Erfindung**

Der Erfindung liegt die Aufgabe zu Grunde, eine gattungsgemässe Transpondereinheit anzugeben, bei welcher eine ausreichende Energieaufnahme des Transponders auch bei geringen Feldstärken gewährleistet ist. Diese Aufgabe wird durch die Merkmale im Kennzeichen des Anspruchs 1 gelöst.

Bei der erfindungsgemässen Transpondereinheit ist die Sekundärwicklung des Koppelkreises eng und in spezifischer Weise an die Antennenwicklung gekoppelt, derart, dass der Transponder auch bei geringen Feldstärken verhältnismässig viel Energie aufnimmt, so dass er auch bei grossem Leseabstand zuverlässig funktioniert. Umgekehrt haben durch die gleiche hochwirksame Kopplung die vom Transponder ausgesandten Signale über einen weiteren Raumbereich eine für ein zuverlässiges Ansprechen des Lesegeräts ausreichende Feldstärke. Die gegenseitige Lage des Transponders und des Lesegeräts müssen daher weniger genau kontrolliert werden.

Dies kommt etwa bei erfindungsgemässen Transporteinheiten mit einer integrierten erfindungsgemässen Transpondereinheit zum Tragen, bei denen das Auslesen des Transponders auch an Stellen erfolgen kann, die verhältnismässig weit vom Lesegerät entfernt sind. Aber auch bei Karten z. B. im Kreditkartenformat kann eine erfindungsgemässe Transpondereinheit mit Vorteil eingesetzt werden. Die Antennenschleife kann verhältnismässig klein gehalten werden, so dass sie leicht herstellbar oder sogar mit der integrierten Schaltung integrierbar ist und der vorgefertigte Transponder kompakt und leicht zu kaspeln ist, während durch den Koppelkreis, der in die Karte integriert sein kann, Energieaufnahme und Signalabgabe wesentlich verbessert sind und dadurch der zulässige Leseabstand grösser ist.

## Kurze Beschreibung der Zeichnungen

Im folgenden wird die Erfindung anhand von Figuren, welche lediglich Ausführungsbeispiele darstellen, näher erläutert.

Es zeigen

Fig. 1   schematisch eine erfindungsgemässe Transpondereinheit mit Lesegerät,

Fig. 2   eine Draufsicht auf eine erfindungsgemässe Transporteinheit und

Fig. 3   eine Draufsicht auf eine erfidnungsgemässe Karte.

## Wege zur Ausführung der Erfindung

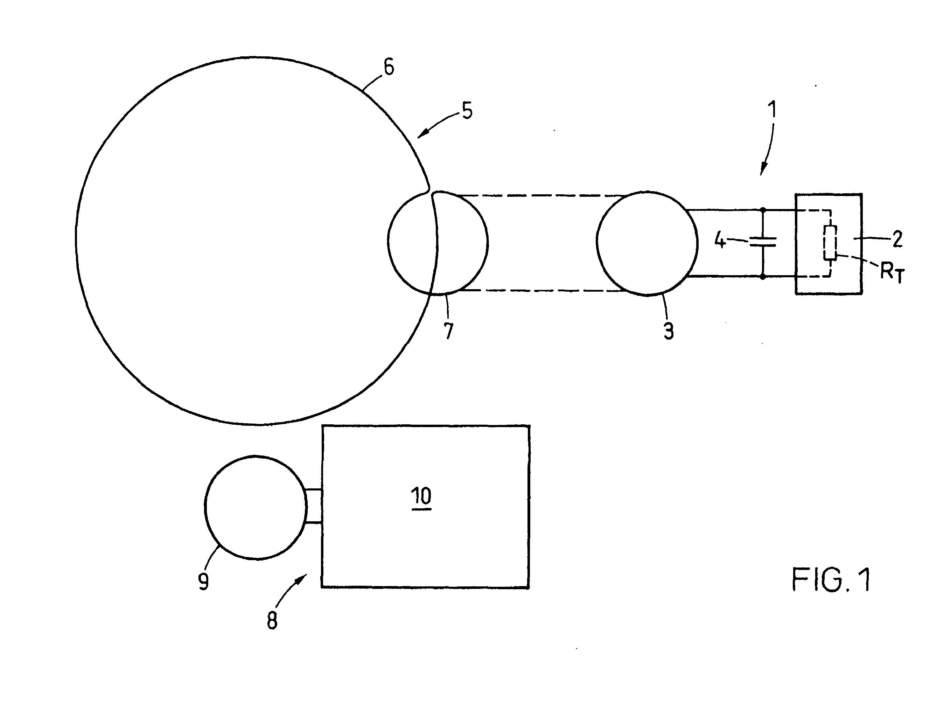

Die Transpondereinheit umfasst (Fig. 1) einen Transponder 1 bekannter Art mit einer integrierten Schaltung 2 mit einem Innenwiderstand $R_T$ und einer Antennenwicklung 3, deren Enden mit Anschlüssen der integrierten Schaltung 2 verbunden sind, an welche ein Gleichrichter und ein als Energiespeicher dienender Kondensator anschliessen. Die Antennenwicklung 3 weist eine Induktivität $L_A$ und einen Widerstand $R_A$ auf. Zwischen den Anschlüssen der integrierten Schaltung 2 liegt ausserdem ein Kondensator 4 mit einer Kapazität $C_A$. Im weiteren enthält die integrierte Schaltung 2 einen nichtflüchtigen digitalen Speicher für digitale Daten, welche zur Kennzeichnung eines mit ihm verbundenen Gegenstandes dienen sowie eine ebenfalls mit den Anschlüssen verbundene Sendeeinrichtung, mittels welcher die Daten codiert und gesendet werden können. Der Transponder 1 ist in der Regel gekapselt, z. B. in einem geeigneten Kunststoffgehäuse oder einer ISO-Karte.

Ein vom Transponder galvanisch getrennter Koppelkreis 5 weist eine Primärwicklung 6 und eine mit derselben in Reihe liegende Sekundärwicklung 7 auf, welche zusammen eine geschlossene Leiterschleifenanordnung bilden. Wie später noch genauer dargelegt werden wird, ist es in vielen Fällen günstig, wenn die beiden Wicklungen jeweils nur geringe Selbstinduktivitäten aufweisen, ausserdem ist ein niedriger Widerstand des Koppelkreises 5 wünschenswert. Falls keine anderen Auslegungskriterien dagegen sprechen, ist es daher vorteilhaft, wenn die Wicklungen jeweils nur eine Windung aufweisen, zumal dies auch die Herstellung sehr vereinfacht. Bei der Primärwicklung ist dies in der Regel möglich, während die Sekundärwicklung oft im Interesse ausreichender Kopplung an die Antennenwicklung des Transponders 1 mehrere Windungen aufweisen muss.

Vorzugsweise weist die Sekundärwicklung 7 den entgegengesetzten Wickelsinn auf wie die Primärwicklung 6. Die Sekundärwicklung 7 kann ausserdem mit Vorteil so zur Primärwicklung 6 angeordnet sein, dass ihre gegenseitige induktive Kopplung nahe Null ist. Das kann etwa so geschehen, dass beide im wesentlichen in einer Ebene derart angeordnet werden, dass die von der Sekundärwicklung 7 umgebene Fläche teils mit der von der Primärwicklung 6 umgebenen Fläche überlappt und zum Teil mit dem Komplement dieser Fläche, d. h. dem ausserhalb der Primärwicklung 6 liegenden Bereich.

Die Primärwicklung 6 kann einen verhältnismässig grossen Durchmesser von z. B. 300 mm oder mehr aufweisen, während die Sekundärwicklung 7 vorzugsweise einen ungefähr dem der Antennenschleife 3 entsprechenden Durchmesser hat, z. B. ca. 50 mm. Die genauen Abmessungen und Formen der Wicklungen sind nicht entscheidend, doch sollte die Primärwicklung 6 deutlich grösser sein als die Sekundärwicklung 7, während diese in Form und Abmessungen ungefähr der Antennenwicklung 3 entsprechen sollte, in deren unmittelbarer Nachbarschaft sie auch angebracht ist, und zwar derart, dass die gegenseitige Induktion der Sekundärwicklung 7 und der Antennenwicklung 3 im Interesse optimaler Energieaufnahme des Transponders 1 eine durch eine weiter unten beschriebene und erläuterte Relation bestimmte Grösse annimmt.

Ein Lesegerät 8 weist ebenfalls eine Antennenwicklung 9 auf, welche mit Anschlüssen einer Schaltung 10 verbunden ist. Sie enthält einen Generator, der eine Wechselspannung $V_R$ mit einer gewöhnlich im MHz-Bereich liegenden Frequenz $\omega$ erzeugt, die einer Empfangsfrequenz des Transponders 1 entspricht sowie einen Empfänger, der vom Transponder ausgehende von der Antennenwicklung 8 aufgefangene Signale empfängt und dekodiert. Die Wechselspannung $V_R$ ruft einen entsprechenden Wechselstrom $I_R$ in der Antennenwicklung 9 hervor.

Spannungen und Ströme in den verschiedenen Kreisen - der Antennenspule des Lesegeräts, der Primärspule und der Sekundärspule des Kopplungskreises und dem Antennenkreis des Transponders - werden dann durch die folgenden Gleichungen beschrieben:

$$(1a) \qquad j\omega L_R I_R - j\omega(M_{RP} \pm M_{RS})I_C - j\omega M_{RA} I_A = V_R$$

(1b)     $-j\omega(M_{RP}\pm M_{RS})I_R+j\omega(L_P+L_S\pm 2M_{PS})I_C-j\omega(M_{PA}\pm M_{SA})I_A = 0$

(1c)     $-j\omega M_{RA}I_R-j\omega(M_{PA}\pm M_{SA})I_C+[R_A+j\omega L_A+R_T/(1+j\omega C_A R_T)]I_A = 0$

Dabei steht $\pm$ für +, falls der Wickelsinn der Sekundärwicklung 7 mit dem der Primärwicklung 6 übereinstimmt und für -, wenn er entgegengesetzt ist. $V_R$ ist wie erwähnt die Ausgangsspannung des Lesegeräts 8, die an der Antennenspule 9 desselben anliegt und $L_x$ steht für die Induktivität des Kreises X, mit X=R die Antennenwicklung 9 des Lesegeräts 8 und mit X=P,S,A die Primärwicklung 6 und die Sekundärwicklung 7 des Koppelkreises 5 und die Antennenwicklung 3 des Transponders 1, entsprechend bezeichnet $I_x$ den Strom im Kreis X mit X=R,C,A, wobei C den Koppelkreis 5 bezeichnet. $R_A$ ist wie schon erwähnt der Widerstand der Antennenwicklung 3 des Transponders 1 und $R_T$ der Eingangswiderstand der Transponderschaltung 2, $C_A$ die Kapazität des Kondensators 4. $M_{XY}$ beschreibt jeweils die gegenseitige Induktivität der Wicklungen X,Y=R,P,S,A. Die Ohmschen Widerstände des Koppelkreises 5 und der Antennenwicklung 9 des Lesegeräts 8 sind in den Gleichungen vernachlässigt. Für $V_T$, die für die Energieaufnahme der Transponderschaltung 2 entscheidende am Eingang derselben anliegende Spannung gilt

(2)     $V_T = R_T/(1+j\omega C_A R_T) \times I_A$

Vernachlässigt man die verhältnismässig kleinen gegenseitigen Induktivitäten $M_{RA}$ und $M_{PA}$, so vereinfachen sich (1a) - (1c) zu

(3a)     $j\omega L_R I_R-j\omega (M_{RP}\pm M_{RS}) I_C = V_R$

(3b)     $-j\omega(M_{RP}\pm M_{RS})I_R+j\omega(L_P+L_S\pm 2M_{PS})I_C-j\omega(\pm M_{SA})I_A = 0$

(3c)     $-j\omega(\pm M_{SA})I_C+[R_A+j\omega L_A+R_T/(1+j\omega C_A R_T)]I_A = 0$

Die Vernachlässigung von $M_{RA}$ ist übrigens nicht kritisch, da die direkte Kopplung zwischen der Antennenwicklung 9 des Lesegeräts 8 und der Antennenwicklung 3 des Transponders 1 die Optimierung der übrigen Parameter kaum beeinflusst und die Gesamtkopplung sogar leicht verbessert. Aus (2), (3) ergibt sich die Uebertragungsfunktion zwischen der Antennenwicklung 9 des Lesegeräts 8 und der Transponderschaltung 2 zu

(4)     $|V_T/I_R| = \omega|M_{RP}\pm M_{RS}|/$

$$\sqrt{} \{[\omega^2 M_{SA}C_A-(L_P+L_S\pm 2M_{PS})/M_{SA}\times (R_A/R_T-\omega^2 L_A C_A+1)]^2$$

$$+ [\omega M_{SA}/R_T+ (L_P+L_S\pm 2M_{PS})/M_{SA}\times (\omega L_A/R_T+\omega C_A R_A)]^2\}$$

Geht man davon aus, dass die Frequenz $\omega$ etwa der Resonanzfrequenz $\omega_r$ des von der Antennenwicklung 3 des Transponders 1 und dem Kondensator 4 gebildeten Schwingkreises entspricht, also

(5)     $\omega^2 \approx \omega_r^2 = 1/(L_A C_A)$

ist und der Eingangswiderstand $R_T$ der Transponderschaltung 2 sehr gross ist, so gilt in guter Näherung

(6)     $|V_T/I_R| = |M_{RP}\pm M_{RS}|/\{C_A\sqrt{}[\omega^2 M_{SA}^2+(R_A/M_{SP})^2(L_P+L_S\pm 2M_{PS})^2]\}$

$|V_T/I_R|$ erreicht ein Maximum bei

$$(7) \qquad M_{SA} = \sqrt{[(R_A/\omega)(L_P+L_S\pm2M_{PS})]}$$

Die Sekundärwicklung 7 und der Antennenwicklung 3 werden so ausgelegt und ihre gegenseitige Lage so bestimmt, dass die Relation (7) möglichst genau eingehalten wird. Abweichungen von dieser Relation sollten möglichst gering sein, auf jede Fall sollte $|V_T/I_R|$ nicht mehr als höchstens um den Faktor $1/\sqrt{e}$ vom Maximalwert abweichen. Die gegenseitige Kopplung zwischen der Primärwicklung 6 und der Sekundärwicklung 7 sollte möglichst klein sein und der Relation $M_{PS}\leq(L_P+L_S)/100$ genügen.

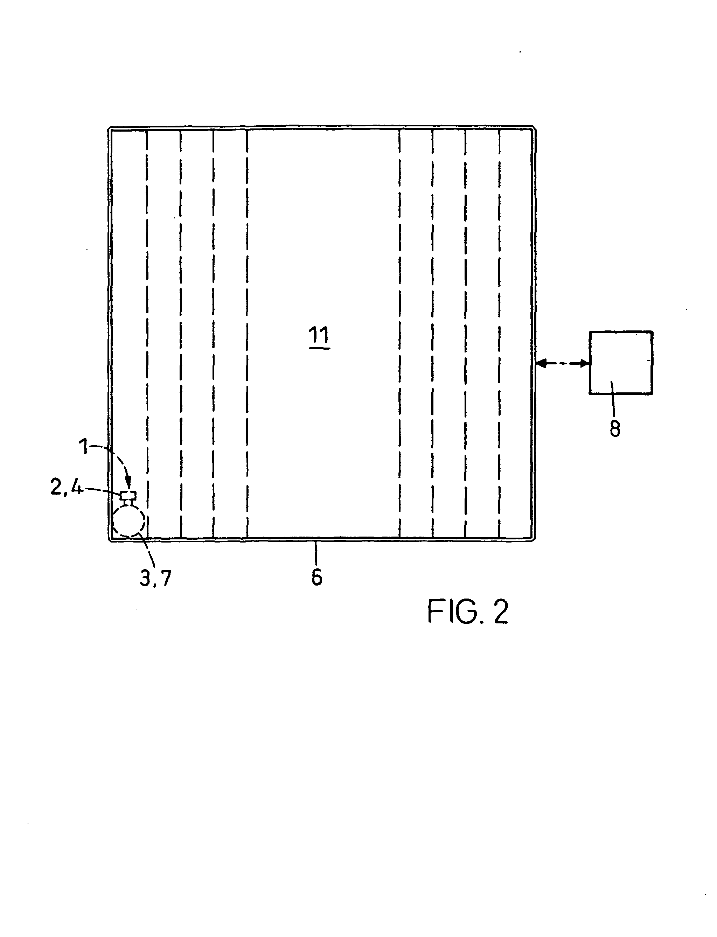

Bei der in Fig. 2 dargestellten erfindungsgemässen Transporteinheit mit einer in den Grundzügen der in Fig. 1 beschriebenen entsprechenden Transpondereinheit handelt es sich um eine Europalette, eine Normpalette aus Holz mit einer Platte 11 von ca. 0,8 m $\times$ 1,2 m und mehreren parallelen Fussbalken an der Unterseite. Der gekapselte Transponder 1, bestehend aus der integrierten Schaltung 2 mit dem Kondensator 4 und der Antennenwicklung 3, ist in einer Ecke der Platte 11 integriert. Die Primärwicklung 6 des Koppelkreises wird von einem Band aus Stahl oder Aluminium gebildet, das die Platte 11 umgibt. Die mit derselben in Reihe liegende Sekundärschleife 7 ist ebenfalls in die Platte 11 integriert und ist mit der Antennenwicklung 3 des Transponders 1 so gekoppelt, dass die Relation (7) eingehalten ist. Der Transponder 1 kann wie weiter oben erläutert von einem irgendwo in der Nähe der Primärwicklung 6 angeordneten Lesegerät 8 ausgelesen werden, so dass eine genaue Positionierung des Transponders 1 bezüglich des Lesegeräts 8 nicht erforderlich ist.

Grundsätzlich ähnliche Lösungen sind in vielen Bereichen, vor allem aber bei Transporteinheiten zum Transport verschiedenster Güter möglich. So kann die Primärwicklung von einem in einen Behälter eingegossenen oder an der Aussenseite oder im Inneren desselben befestigten Ring oder Band o. dgl. gebildet werden, von einem ganz oder teilweise aus Metall bestehenden Wäschebügel oder auch einem Metallband, das einen Ballen von irgendwelchem Material zusammenhält. Vorzugsweise ist dabei die Primärwicklung so ausgebildet, dass sie die Transporteinheit im wesentlichen umgibt, d. h. im Bereich ihrer Aussenseite - wenn auch eventuell versenkt - umläuft, so dass ihre Abmessungen zur Herstellung einer möglichst grossen von der Primärwicklung umgebenen Fläche ausgenutzt sind. Auf diese Weise können mittels erfindungsgemässer Transpondereinheiten Flaschen, Eimer, Container, Wäschestücke, Stoffballen und vieles andere mehr gekennzeichnet und ihr Umlauf verhältnismässig bequem mittels Lesegeräten überwacht werden.

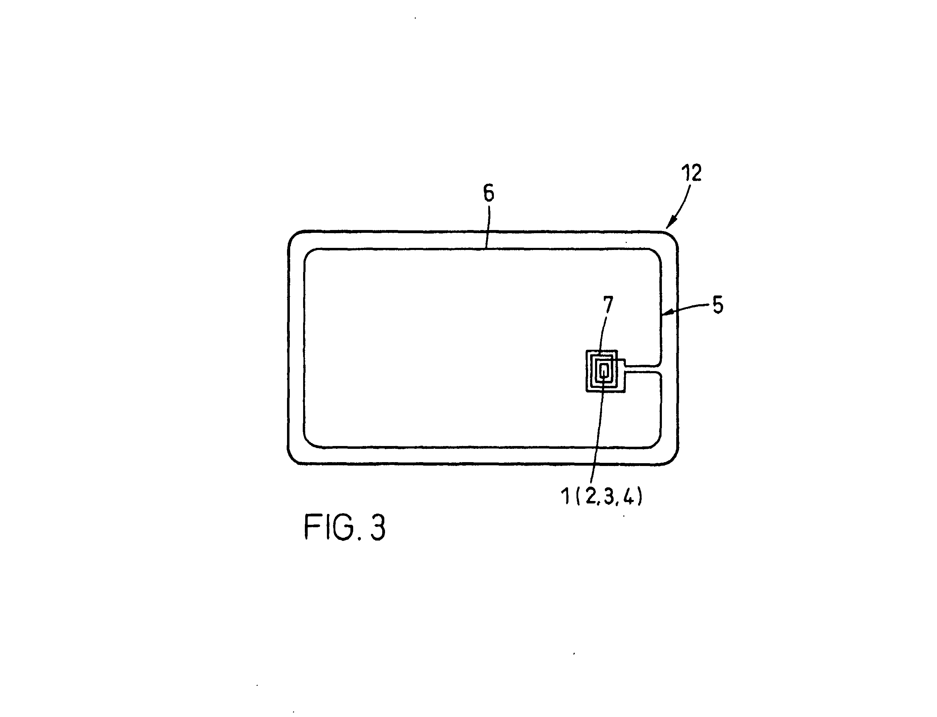

In der in Fig. 3 dargestellten Karte 12, die aus Kunststoff besteht und in Format und Ausbildung einer Kreditkarte oder Kontokarte entspricht, ist ein gekapselter Transponder 1 mit einer Empfangsfrequenz von 13,56MHz integriert. Die mit der integrierten Schaltung 2 integrierte Antennenschleife 3 ist etwa quadratisch mit Abmessungen 2,5mm $\times$ 2,5mm und 60 Windungen. Ihre Induktivität beträgt $L_A=6\mu H$, ihr Widerstand $R_A=20\Omega$. Der ebenfalls mit der integrierten Schaltung 2 integrierte Kondensator 4 weist eine Kapazität $C_A=23pF$ auf. Der Koppelkreis 5 ist ebenfalls in die Karte 12 integriert. Die Primärspule 6 des Koppelkreises 5 folgt etwa dem Rand der Karte und weist eine Windung von 80mm $\times$ 50mm auf, ihre Induktivität ist $L_P=240nH$. Die gegensinnig gewickelte Sekundärwicklung 7 liegt innerhalb der Primärwicklung 6 und umgibt den Transponder 1. Sie besteht aus drei Windungen der Abmessung 4mm $\times$ 4mm und weist eine Induktivität $L_S=65nH$ auf.

Die gegenseitigen Induktivitäten sind $M_{PS}=0,7nH$, $M_{SA}=189nH$ und $M_{PA}=3,5nH$. $M_{SA}$ entspricht genau der Relation (7).

Die Antennenspule des Lesegeräts (nicht dargestellt) ist kreisförmig mit einem Durchmesser von 100mm und weist fünf Windungen auf. Sie wird von einem Wechselstrom von $I_R\approx100mA$ durchflossen, dessen Frequenz der Empfangsfrequenz von 13,56MHz entspricht. Ihre Induktivität beträgt $L_R=7\mu H$. Die gegenseitigen Induktivitäten der Antennenspule des Lesegeräts und der übrigen Wicklungen sind $M_{RP}=71nH$, $M_{RS}=0,8nH$ und $M_{RA}=3,5nH$. Aus den angegebenen elektrischen Grössen resultiert aus (6) ein Wert für $|V_T/I_R|$ von 86,2V/A. Der zulässige Leseabstand beträgt unter diesen Umstanden ca. 50mm.

Natürlich können erfindungsgemässe Transpondereinheiten auch an Produkten aller Art wie Ordner, Autoreifen etc. direkt befestigt oder in sie integriert sein.

**Bezugszeichenliste**

1     Transponder
2     integrierte Schaltung
3     Antennenwicklung
4     Kondensator
5     Koppelkreis
6     Primärwicklung

7    Sekundärwicklung
8    Lesegerät
9    Antennenwicklung
10    Schaltung
11    Platte
12    Karte

**Patentansprüche**

1.    Transpondereinheit, welche einen Transponder (1) mit einer Antennenwicklung (3) mit einer Induktivität $L_A$ und einem Widerstand $R_A$ und mit einem zur Antennenwicklung parallelen Kondensator (4) mit einer Kapazität $C_A$ umfasst sowie einen geschlossenen Koppelkreis (5) mit einer Sekundärwicklung (7) mit einer Induktivität $L_S$, welche mit der Antennenwicklung (3) induktiv gekoppelt ist und einer Primärwicklung (6) grösseren Durchmessers mit einer Induktivität $L_P$, welche mit der Sekundärwicklung (7) in Reihe liegt und mit ihr über eine gegenseitige Induktivität $M_{PS}$ induktiv gekoppelt ist, **dadurch gekennzeichnet, dass** die gegenseitige Induktivität $M_{SA}$, welche die Sekundärwicklung (7) an die Antennenwicklung (3) koppelt, der Relation $M_{SA} = \sqrt{[(R_A/\omega)(L_P+L_S\pm2M_{PS})]}$ folgt, wobei $\omega$ der Empfangsfrequenz des Transponders (1) entspricht und $\omega^2 \approx 1/(L_AC_A)$ gilt und wobei $\pm$ für + steht, falls der Wickelsinn der Sekundärwicklung (7) mit dem der Primärwicklung (6) übereinstimmt und für -, wenn er entgegengesetzt ist.

2.    Transpondereinheit nach Anspruch 1, **dadurch gekennzeichnet, dass** die gegenseitige Induktivität $M_{PS}$ der Primärwicklung (6) und der Sekundärwicklung (7) und die Induktivitäten $L_P$, $L_S$ derselben der Relation $M_{PS}\leq(L_P+L_S)/100$ genügen.

3.    Transpondereinheit nach Anspruch 1 oder 2, **dadurch gekennzeichnet, dass** die Primärwicklung (6) und die Sekundärwicklung (7) im wesentlichen in einer Ebene angeordnet sind und entgegengesetzten Wickelsinn aufweisen und dass die von der Sekundärwicklung (7) umgebene Fläche zum Teil mit der von der Primärwicklung (6) umgebenen Fläche überlappt.

4.    Transpondereinheit nach einem der Ansprüche 1 bis 3, **dadurch gekennzeichnet, dass** die Sekundärwicklung (7) eine grössere Anzahl von Windungen aufweist als die Primärwicklung (6).

5.    Transpondereinheit nach einem der Ansprüche 1 bis 4, **dadurch gekennzeichnet, dass** die Primärwicklung (6) nur eine Windung aufweist.

6.    Transpondereinheit nach einem der Ansprüche 1 bis 5, **dadurch gekennzeichnet, dass** der Durchmesser der Antennenwicklung (3) höchstens 150 mm beträgt.

7.    Transpondereinheit nach einem der Ansprüche 1 bis 6, **dadurch gekennzeichnet, dass** der Transponder (1) gekapselt und der Koppelkreis (5) ausserhalb der Kapselung angeordnet ist.

8.    Transporteinheit mit einer integrierten Transpondereinheit nach einem der Ansprüche 1 bis 7, **dadurch gekennzeichnet, dass** die Primärwicklung (6) im Bereich der Aussenseite der Transporteinheit umläuft.

9.    Transporteinheit nach Anspruch 8, **dadurch gekennzeichnet, dass** sie eine Palette, ein Behälter, ein Wäschebügel oder ein Ballen ist.

10.    Karte mit einer integrierten Transpondereinheit nach einem der Ansprüche 1 bis 7, **dadurch gekennzeichnet, dass** der Transponder (1) einschliesslich der Antennenspule (3) gekapselt und der Koppelkreis (5) in die Karte integriert ist.

**Claims**

1.    Transponder unit which has a transponder (1) with an antenna winding (3) with an inductance $L_A$ and a resistance $R_A$, and with a capacitor (4) in parallel with the antenna winding with a capacitance $C_A$, and which transponder unit has a closed coupling loop (5) with a secondary winding (7), which has an inductance $L_S$ and is inductively coupled to the antenna winding (3), and has a larger diameter primary winding (6) which has an inductance Lp and is connected in series with the secondary winding (7), and is inductively coupled to it via a mutual inductance $M_{PS}$, **characterized in that** the mutual inductance $M_{SA}$ which couples the secondary winding (7) to the antenna winding (3) follows the relationship $M_{SA} = \sqrt{[(R_A/\omega) (L_P+L_S\pm2M_{PS})]}$ where $\omega$ corresponds to the reception frequency of the transponder (1) and $\omega^2 \approx 1/(L_AC_A)$, and where $\pm$ represents + if the winding sense of the secondary winding (7) matches that of the primary winding (6), and representing - when it is in opposite sense.

2. Transponder unit according to Claim 1, **characterized in that** the mutual inductance $M_{PS}$ of the primary winding (6) and of the secondary winding (7), and their inductances $L_P$, $L_S$, satisfy the relationship $M_{PS}\leq(L_P+L_S)$ /100.

3. Transponder unit according to Claim 1 or 2, **characterized in that** the primary winding (6) and the secondary winding (7) are arranged essentially on one plane and have opposite winding senses, and **in that** the area which is surrounded by the secondary winding (7) partially overlaps the area which is surrounded by the primary winding (6).

4. Transponder unit according to one of Claims 1 to 3, **characterized in that** the secondary winding (7) has a greater number of turns than the primary winding (6).

5. Transponder unit according to one of Claims 1 to 4, **characterized in that** the primary winding (6) has only one turn.

6. Transponder unit according to one of Claims 1 to 5, **characterized in that** the diameter of the antenna winding (3) is at most 150 mm.

7. Transponder unit according to one of Claims 1 to 6, **characterized in that** the transponder (1) is encapsulated, and the coupling loop (5) is arranged outside the encapsulation.

8. Transport unit having an integrated transponder unit according to one of Claims 1 to 7, **characterized in that** the primary winding (6) is circumferential in the area of the outer face of the transport unit.

9. Transport unit according to Claim 8, **characterized in that** the transport unit is a pallet, a container, a laundry hanger or a bale.

10. Card with an integrated transponder unit according to one of Claims 1 to 7, **characterized in that** the transponder (1) is encapsulated including the antenna coil (3), and the coupling loop (5) is integrated in the card.

## Revendications

1. Unité de transpondeur qui comprend un transpondeur (1) avec une antenne-bobine (3) dotée d'une inductance $L_A$ et d'une résistance $R_A$ et avec un condensateur (4) doté d'une capacité $C_A$ parallèle à l'antenne-bobine ainsi qu'un circuit de couplage (5) fermé avec une bobine secondaire (7) dotée d'une inductance $L_S$ qui est couplée de manière inductive avec l'antenne-bobine (3) et une bobine primaire (6) de plus grand diamètre dotée d'une inductance $L_P$ qui est montée en série avec la bobine secondaire (7) et est couplée de manière inductive avec elle par une inductance réciproque $M_{PS}$, **caractérisée en ce que** l'inductance réciproque $M_{SA}$ qui couple la bobine secondaire (7) avec l'antenne-bobine (3) suit la relation $M_{SA} = \sqrt{[(R_A/\omega) (L_P+L_S\pm2M_{PS})]}$, dans laquelle $\omega$ correspond à la fréquence de réception du transpondeur (1) et $\omega^2 \approx 1/(L_AC_A)$ et dans laquelle $\pm$ est égal à + si le sens d'enroulement de la bobine secondaire (7) coïncide avec celui de la bobine primaire (6) et à - s'il lui est opposé.

2. Unité de transpondeur selon la revendication 1, **caractérisée en ce que** l'inductance réciproque $M_{PS}$ de la bobine primaire (6) et de la bobine secondaire (7) et les inductances $L_P$, $L_S$ de celles-ci satisfont la relation $M_{PS}\leq(L_P+L_S)$ /100.

3. Unité de transpondeur selon la revendication 1 ou 2, **caractérisée en ce que** la bobine primaire (6) et la bobine secondaire (7) sont disposées sensiblement dans un même plan et présentent des sens d'enroulement opposés et que la surface entourée par la bobine secondaire (7) se recoupe partiellement avec la surface entourée par la bobine primaire (6).

4. Unité de transpondeur selon l'une quelconque des revendications 1 à 3, **caractérisée en ce que** la bobine secondaire (7) présente un plus grand nombre de spires que la bobine primaire (6).

5. Unité de transpondeur selon l'une quelconque des revendications 1 à 4, **caractérisée en ce que** la bobine primaire (6) possède une seule spire.

6. Unité de transpondeur selon l'une quelconque des revendications 1 à 5, **caractérisée en ce que** le diamètre de l'antenne-bobine (3) est de 150 mm maximum.

7. Unité de transpondeur selon l'une quelconque des revendications 1 à 6, **caractérisée en ce que** le transpondeur (1) est encapsulé et le circuit de couplage (5) disposé à l'extérieur de la capsule.

8. Unité de transport avec une unité de transpondeur intégrée selon l'une quelconque des revendications 1 à 7, **caractérisée en ce que** la bobine primaire (6) fait le tour de la zone de la face extérieure de l'unité de transport.

9. Unité de transport selon la revendication 8, **caractérisée en ce qu'**elle est une palette, un récipient, un cintre ou une balle.

10. Carte avec une unité de transpondeur intégrée selon l'une quelconque des revendications 1 à 7, **caractérisée en ce que** le transpondeur (1) avec l'antenne-bobine (3) est encapsulé et le circuit de couplage (5) intégré dans la carte.

FIG. 1

FIG. 2

FIG. 3